# EUROPÄISCHE PATENTSCHRIFT

(11) **EP 4 232 308 B1**
(45) Veröffentlichungstag und Bekanntmachung des Hinweises auf die Patenterteilung: **04.12.2024**
(21) Anmeldenummer: 21797937.6
(22) Anmeldetag: 07.10.2021
(51) Int. Cl.: B60H 1/00, F04D 29/66, F24F 13/24, F04D 29/42, F24F 13/20

(54) **TEMPERIERUNGSVORRICHTUNG**
TEMPERATURE CONTROL DEVICE
DISPOSITIF DE RÉGULATION DE TEMPÉRATURE

(30) Priorität: 21.10.2020 DE 102020006479
(43) Veröffentlichungstag der Anmeldung: 30.08.2023
(73) Patentinhaber: Truma Gerätetechnik GmbH & Co. KG, 85640 Putzbrunn (DE)
(72) Erfinder: WOLFROM, Timo, 85640 Putzbrunn (DE)
(74) Vertreter: Prinz & Partner mbB
(86) Internationale Anmeldenummer: PCT/EP2021/000118
(87) Internationale Veröffentlichungsnummer: WO 2022/083885

(56) Entgegenhaltungen:
- EP-A1- 3 572 254
- DE-A1- 3 040 815
- DE-T2- 60 304 308
- US-A1- 2010 183 433

## Beschreibung

Die vorliegende Erfindung betrifft eine Temperierungsvorrichtung zum Temperieren von Luft. Dabei handelt es sich beispielweise um eine Klimaanlage zum Kühlen eines Raumes. In einer Variante handelt es sich um eine auf dem Dach eines Fahrzeugs (z. B. eines Wohnmobils oder eines Wohnwagens) zu befestigende Klimaanlage. In einer alternativen Variante handelt es sich um eine Heizung, die Luft erwärmt.

Bei Heizungen (sog. Luftheizungen) ist es bekannt, die aus der Verbrennung beispielsweise von Luft, Diesel oder Benzin gewonnene thermische Energie auf die Luft zu übertragen. Hierfür sind beispielsweise Wärmetauscher vorgesehen, die von der zu erwärmenden Luft durchströmt werden.

Das der Luftkühlung zugrundeliegende Prinzip der Kälteerzeugung mittels eines Kühlkreislaufs ist seit langem bekannt und beispielsweise in der WO 2007/042065 A1 beschrieben. Vorhanden sind in solchen Klimaanlagen zumeist zwei Gebläse und zwei Wärmetauscher: Ein Gebläse und ein zugeordneter Wärmetauscher gehören zum Verdampfer, in dem die Luft des zu kühlenden Raumes durch die Wechselwirkung mit dem Kältemittel abgekühlt wird. Ein weiteres Gebläse und ein zugeordneter Wärmetauscher gehören zum Verflüssiger, in welchem thermische Energie des Kältemittels auf die Umgebungsluft übertragen und somit abgeführt wird.

Durch die verwendeten Komponenten, durch die bewegte Luft und weitere Resonanzeffekte stellen sich häufig Geräusche ein, die als unangenehm empfunden werden können.

Die Verwendung von Schallbarrieren offenbart beispielsweise die DE 10 2006 050 339 A1.

Eine weitere Temperierungsvorrichtung mit einem Ausgleichsring wird durch die DE 603 04 308 T2 offenbart.

Die der Erfindung zugrundeliegende Aufgabe besteht daher darin, eine Temperierungsvorrichtung vorzuschlagen, die sich durch eine reduzierte Geräuschkulisse auszeichnet.

Die Erfindung löst die Aufgabe durch eine Temperierungsvorrichtung zum Temperieren von Luft gemäß Anspruch 1, wobei die Temperierungsvorrichtung ein Gebläse und einen Ausblasbereich in einem Gehäuse aufweist, wobei das Gebläse Luft zu dem Ausblasbereich bewegt, wobei in dem Ausblasbereich ein schallwellenwirksamer Körper angeordnet ist, und wobei der schallwellenwirksame Körper Teil eines Ausgleichsrings zum Erzeugen eines an den Ausblasbereich angrenzenden Luftkanals ist.

Ein Gebläse befördert Luft in einen Ausblasbereich, über den die Luft das Gehäuse der Temperierungsvorrichtung verlässt. Der Ausblasbereich ist beispielsweise in einer Ausgestaltung mit einem Luftverteiler gekoppelt, der sich in dem Raum befindet, dessen Luft zu temperieren ist, und dort für die Verteilung der gekühlten oder erwärmten Raumluft sorgt. In dem Ausblasbereich befindet sich ein Körper, der schallwellenwirksam ist, sich also auf die Luft in Bezug auf entstehende oder bereits entstandene Geräusche auswirkt. Dieser schallwellenwirksame Körper ist Teil eines Ausgleichsrings. Der Körper kann dabei je nach Ausgestaltung ein integraler Bestandteil des Ausgleichsrings oder kann in einer alternativen Ausgestaltung mit einer Grundform des Ausgleichsrings verbunden sein. Der Ausgleichsring dient dem Erzeugen eines an den Ausblasbereich angrenzenden Luftkanals. Der Ausgleichsring bildet somit eine Verlängerung des Bereichs, in dem die Luft geführt wird. In einer Variante bewirkt der Ausgleichsring den Ausgleich von Höhenunterschieden beim Befestigen der Temperierungsvorrichtung auf einer Stellfläche (z. B. einem Fahrzeugdach) relativ zum Ausblasbereich unterhalb der Stellfläche (entsprechend im Raum unterhalb des Fahrzeugdachs). Alternativ oder ergänzend dient der Ausgleichsring als Abdichtung eines Übergangs zwischen dem Ausblasbereich und einer weiteren Komponente, die mit dem Gehäuse verbunden ist oder an welche ein Übergang des Gehäuses z. B. zum Dach oder der Decke stattfindet. Der Ausgleichsring verfügt somit über einen zumindest teilweise umschlossenen Bereich, in dem die Luft, die aus dem Ausblasbereich stammt, geführt wird. Ein Vorteil der Erfindung besteht darin, dass die Montage vereinfacht wird, da keine Komponente für die Schalldämpfung separat befestigt oder montiert werden muss. Überdies ist es so möglich, unterschiedliche Varianten einer Temperierungsvorrichtung (also mit oder ohne Reduktion der Geräusche) mit dem gleichen Gehäuse zu realisieren.

Erfindungsgemäß dient der Ausgleichsring einem Höhenausgleich zwischen dem Gehäuse und einem Raumluftverteiler. In dieser Ausgestaltung kann somit über den Ausgleichsring Rücksicht auf beispielsweise unterschiedliche Dachstärken genommen werden. In einer Ausgestaltung dienen der Ausgleichsring und mindestens ein Höhenausgleichsring dem Höhenausgleich und der Ausgleichsring und der Höhenausgleichsring werden durch ineinander einrastende Geometrien miteinander verbunden. Das Verbinden erfolgt z. B. durch ein Ineinanderstecken.

Erfindungsgemäß ist der schallwellenwirksame Körper reversibel in dem Ausblasbereich angeordnet. Indem der schallwellenwirksame Körper Teil des Ausgleichsrings ist und dieser während der Montage in Kontakt mit dem Gehäuse gebracht wird, kann der Körper somit auch wieder entfernt werden.

In einer Ausgestaltung weist der schallwellenwirksame Körper im Wesentlichen eine Quaderform auf.

Gemäß einer Ausgestaltung weist der schallwellenwirksame Körper in einer Richtung eine größere Erstreckung auf als in mindestens einer dazu senkrechten Richtung. Weiterhin ist die Richtung der größeren Erstreckung im Wesentlichen eine Richtung, in welcher die Luft den Ausblasbereich verlässt. Den längsten Wechselwirkungsweg zwischen Luft und Körper ereignet sich somit im Wesentlichen in Strömungsrichtung. Versuche haben gezeigt, dass eine solche Orientierung nur geringe Umlenkungen der Strömung bei nur geringer Volumenänderung erzeugen. Gleichzeitig stellen sich deutliche akustische Effekte ein.

In einer Ausgestaltung besteht der schallwellenwirksame Körper zumindest teilweise aus einem temperaturbeständigen Material. In einer Ausgestaltung verfügt der schallwellenwirksame Körper zumindest auf einem Teil der Außenseite über ein temperaturbeständiges Material.

Gemäß einer Ausgestaltung besteht der schallwellenwirksame Körper zumindest teilweise aus EPP. Bei EPP handelt es sich um expandiertes Polypropylen.

Erfindungsgemäß hat der schallwellenwirksame Körper schallschluckende Eigenschaften. Der Körper absorbiert somit beispielsweise Schallwellen oder wandelt diese z. B. in Bewegungsenergie um. In einer alternativen oder ergänzenden Ausgestaltung wirkt der schallwellenwirksame Körper als Resonanzkörper. In dieser Ausgestaltung werden beispielsweise bestimmte Frequenzbereiche herausgefiltert oder erfahren eine besondere Verstärkung oder Abschwächung gegenüber dem Gesamt-Spektrum.

Die Erfindung besteht darin, dass die Temperierungsvorrichtung als Klimaanlage ausgestaltet ist, dass die Klimaanlage einen Verdampfer aufweist, und dass das Gebläse die Luft durch den Verdampfer hindurch zu dem Ausblasbereich bewegt. Durch den Verdampfer wird das Kühlmittel geführt, um durch die Wechselwirkung mit der Luft die thermische Energie der zu kühlenden Luft aufzunehmen.

Im Einzelnen gibt es eine Vielzahl von Möglichkeiten, die erfindungsgemäße Temperierungsvorrichtung auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. Es zeigen:
Fig. 1 eine schematische Darstellung eines Klimageräts und
Fig. 2 einen Schnitt durch eine Ausgestaltung einer Klimaanlage.

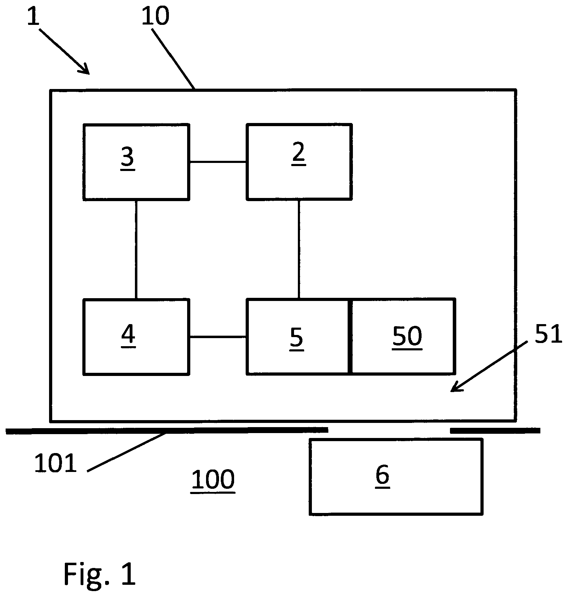

Die Fig. 1 zeigt schematisch den Aufbau einer Klimaanlage 1 zum Kühlen eines Raumes 100 als ein Beispiel für eine Temperierungsvorrichtung. Der damit realisierte Kühlkreislauf oder Kälteprozess ist beispielsweise in der WO 2007/042065 A1 beschrieben. Bei dem Raum 100 handelt es sich beispielsweise um den Innenraum eines Wohnwagens oder eines Wohnmobils. Die Klimaanlage 1 ist für diesen Anwendungsfall auf dem Fahrzeugdach des Wohnwagens bzw. des Wohnmobils befestigt.

Für den Kälteprozess verdichtet ein Kompressor (eine alternative Bezeichnung ist Verdichter) 2 ein gasförmiges Kältemittel, das sich dabei erwärmt und über eine Kältemittelleitung zu einem Verflüssiger (alternative Bezeichnung: Kondensator) 3 transportiert wird. Im Verflüssiger 3 wird die Wärme des Kältemittels an die Umgebungsluft (oder Außenluft) aus der Umgebung um den Raum 100 herum abgegeben. Die Außenluft wird dabei - durch ein entsprechendes Gebläse - angesaugt und nach der Wechselwirkung mit dem Kältemittel in einem Wärmetauscher wieder ausgeblasen. Daher kann diese Einheit 3 auch als Außenluft- oder Outdoor-Wärmeübertrager bezeichnet werden. Infolge der Abgabe der Wärme verflüssigt sich das verdichtete Kältemittel. Das flüssige und weiterhin unter hohem Druck stehende Kältemittel wird in einer Expansionseinrichtung 4, die z. B. als Drossel ausgestaltet ist, auf einen niedrigeren Druck entspannt. Dabei kühlt das Kältemittel ab.

Im nächsten Schritt gelangt das Kältemittel zu einem Verdampfer 5, durch den die Raumluft des zu kühlenden Raumes 100 mittels eines Verdampfer-Gebläses 50 geführt wird. Die Raum-Luft überträgt dabei ihre Wärme auf das Kältemittel, welches in den gasförmigen Zustand übergeht. Somit lässt sich die Komponente 5 auch als Innenluft- oder Indoor-Wärmeübertrager bezeichnen. Das gasförmige Kältemittel gelangt schließlich zurück zu dem Kompressor 2, sodass der Kühlkreislauf fortgeführt werden kann. Die gekühlte Luft wiederum wird durch das Gebläse 50 aus dem Ausblasbereich 51 heraus und durch einen sog. Raumluftverteiler 6 im Raum 100 verteilt. Dabei ist in dem dargestellten Beispiel die Decke 101 des Raums 100 unterbrochen, da sich das Gehäuse 10 mit den beschriebenen Komponenten der Klimaanlage 1 außerhalb des Raums 100 und hier auf dem Dach 101 befindet. Der Kreislauf lässt sich auch umkehren, sodass die Vorrichtung 1 als Raumheizung dient. In diesem Fall fungiert der oben beschriebene Verflüssiger 3 als Verdampfer und dient umgekehrt der Verdampfer 5 als Verflüssiger.

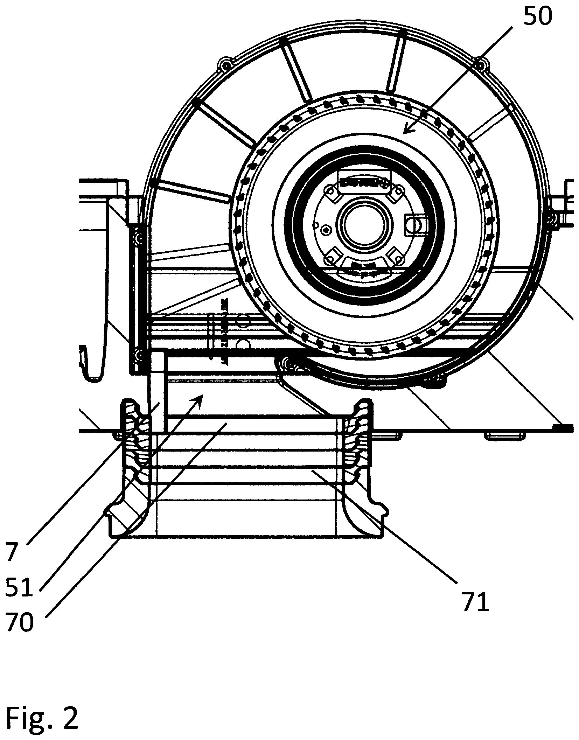

Die Fig. 2 zeigt einen Ausschnitt eines Teils einer Klimaanlage. Zu sehen ist der Ausblasbereich 51 für die vorzugsweise gekühlte Luft hinein in den Raum, der sich unterhalb der Klimaanlage befindet. Das Verdampfer-Gebläse 50 dient dabei der Beförderung der Luft. Eine alternative Bezeichnung wäre Indoor-Gebläse.

Zu erkennen ist der quaderförmige schallwellenwirksame Körper 7, der hier einteilig mit dem oberen Ausgleichsring 70 ausgeführt ist und dessen längere Erstreckung in Richtung des Luftzugs ausgerichtet ist. Der Ausgleichsring 70 und drei weitere Höhenausgleichsringe 71 sowie ein Endstück darunter definieren einen Luftkanal, der sich an den Ausblasbereich 51 anschließt und in den - hier nicht dargestellten - Raumluftverteiler mündet. Die Höhe dieses Luftkanals ist dabei im montierten Zustand abhängig von der Höhe der Decke, die sich zwischen dem oberen Gehäuse und dem unteren Raumluftverteiler befindet (vgl. Fig. 1). Der Ausgleichsring 70 und die Höhenausgleichsringe 71 sind dabei durch korrespondierende Geometrien miteinander verbunden.

### Bezugszeichenliste

- **1**: Temperierungsvorrichtung
- **2**: Kompressor
- **3**: Verflüssiger
- **4**: Expansionseinrichtung
- **5**: Verdampfer
- **6**: Raumluftverteiler
- **7**: schallwellenwirksamer Körper
- **10**: Gehäuse
- **50**: Verdampfer-Gebläse
- **51**: Ausblasbereich
- **70**: Ausgleichsring
- **71**: Höhenausgleichsring
- **100**: Raum
- **101**: Decke

## Patentansprüche

1. Temperierungsvorrichtung (1) zum Temperieren von Luft,
mit einem Ausgleichsring (70),
wobei die Temperierungsvorrichtung (1) als eine auf einem Fahrzeugdach eines Wohnwagens oder Wohnmobils befestigbare Klimaanlage ausgestaltet ist,
wobei die Klimaanlage (1) einen Verdampfer (5) und einen Raumluftverteiler (6) aufweist,
wobei die Temperierungsvorrichtung (1) ein Gebläse (50) und einen Ausblasbereich (51) in einem Gehäuse (10) aufweist,
wobei das Gebläse (50) Luft durch den Verdampfer (5) hindurch zu dem Ausblasbereich (51) bewegt,
wobei in dem Ausblasbereich (51) ein schallwellenwirksamer Körper (7) reversibel angeordnet ist,
wobei der schallwellenwirksame Körper (7) schallschluckende Eigenschaften hat und/oder als Resonanzkörper wirkt,
wobei der schallwellenwirksame Körper (7) Teil des Ausgleichsrings (70) zum Erzeugen eines an den Ausblasbereich (51) angrenzenden und in den Raumluftverteiler (6) mündenden Luftkanals ist, und
wobei der Ausgleichsring (70) einem Höhenausgleich zwischen dem Gehäuse (10) und dem Raumluftverteiler (6) dient.

2. Temperierungsvorrichtung (1) nach Anspruch 1,
wobei der Ausgleichsring (70) und mindestens ein Höhenausgleichsring (71) dem Höhenausgleich dienen, und
wobei der Ausgleichsring (70) und der Höhenausgleichsring (71) durch ineinander einrastende Geometrien miteinander verbunden sind.

3. Temperierungsvorrichtung (1) nach Anspruch 1 oder 2,
wobei der schallwellenwirksame Körper (7) eine Quaderform aufweist.

4. Temperierungsvorrichtung (1) nach einem der Ansprüche 1 bis 3,
wobei der schallwellenwirksame Körper (7) in einer Richtung eine größere Erstreckung als in mindestens einer dazu senkrechten Richtung aufweist, und
wobei die Richtung der größeren Erstreckung eine Richtung ist, in welcher die Luft den Ausblasbereich (51) verlässt.

5. Temperierungsvorrichtung (1) nach einem der Ansprüche 1 bis 4,
wobei der schallwellenwirksame Körper (7) zumindest teilweise aus EPP besteht.

## Claims

1. A temperature control device (1) for controlling the temperature of air, comprising a compensating ring (70),
the temperature control device (1) being configured as an air conditioning system adapted to be fastened on a vehicle roof of a caravan or a mobile home,
the air conditioning system (1) comprising an evaporator (5) and a room air distributor (6),
the temperature control device (1) comprising a fan (50) and a blow-out area (51) in a housing (10),
the fan (50) moving air through the evaporator (5) to the blow-out area (51),
a sound wave-effective body (7) being reversibly arranged in the blow-out area (51),
the sound wave-effective body (7) having sound-absorbing properties and/or acting as a resonating body,
the sound wave-effective body (7) being part of the compensating ring (70) for producing an air duct adjacent to the blow-out area (51) and opening into the room air distributor (6), and
the compensating ring (70) serving as a height compensation between the housing (10) and the room air distributor (6).

2. The temperature control device (1) according to claim 1,
the compensating ring (70) and at least one height compensating ring (71) serving as a height compensation, and
the compensating ring (70) and the height compensating ring (71) being connected to each other by geometries which latch into each other.

3. The temperature control device (1) according to claim 1 or 2,
the sound wave-effective body (7) having a cuboid shape.

4. The temperature control device (1) according to any of claims 1 to 3,
the sound wave-effective body (7) having a greater extension in one direction than in at least one direction perpendicular thereto, and
the direction of the greater extension being a direction in which the air exits the blow-out area (51).

5. The temperature control device (1) according to any of claims 1 to 4,
the sound wave-effective body (7) being at least partially made of EPP.

## Revendications

1. Dispositif de régulation de température (1) pour réguler la température de l'air,
comprenant une bague de compensation (70),
le dispositif de régulation de température (1) étant réalisé sous forme de système de climatisation apte à être fixé sur un toit de véhicule d'une caravane ou d'un camping-car,
le système de climatisation (1) présentant un évaporateur (5) et un distributeur d'air ambiant (6),
le dispositif de régulation de température (1) présentant une soufflante (50) et une zone de soufflage (51) dans un boîtier (10),
la soufflante (50) déplaçant de l'air à travers l'évaporateur (5) en direction de la zone de soufflage (51),
un corps (7) agissant sur les ondes sonores étant agencé de manière réversible dans la zone de soufflage (51),
le corps (7) agissant sur les ondes sonores présentant des propriétés d'insonorisation et/ou agissant en tant que corps de résonance,
le corps (7) agissant sur les ondes sonores faisant partie de la bague de compensation (70) pour générer un canal d'air qui est adjacent à la zone de soufflage (51) et débouche dans le distributeur d'air ambiant (6), et
la bague de compensation (70) servant à une compensation de hauteur entre le boîtier (10) et le distributeur d'air ambiant (6).

2. Dispositif de régulation de température (1) selon la revendication 1,
la bague de compensation (70) et au moins une bague de compensation de hauteur (71) servant à la compensation de hauteur, et
la bague de compensation (70) et la bague de compensation de hauteur (71) étant reliées l'une à l'autre par des géométries qui s'enclenchent l'une dans l'autre.

3. Dispositif de régulation de température (1) selon la revendication 1 ou 2,
le corps (7) agissant sur les ondes sonores présentant une forme parallélépipédique.

4. Dispositif de régulation de température (1) selon l'une des revendications 1 à 3,
le corps (7) agissant sur les ondes sonores présentant, dans une direction, une extension plus grande que dans au moins une direction perpendiculaire à celle-ci, et
la direction de la plus grande extension étant une direction selon laquelle l'air quitte la zone de soufflage (51).

5. Dispositif de régulation de température (1) selon l'une des revendications 1 à 4,
le corps (7) agissant sur les ondes sonores étant au moins partiellement réalisé en PPE.
